# EUROPÄISCHE PATENTSCHRIFT

(11) **EP 3 007 387 B1**
(45) Veröffentlichungstag und Bekanntmachung des Hinweises auf die Patenterteilung: **09.08.2017**
(21) Anmeldenummer: 15182667.4
(22) Anmeldetag: 27.08.2015
(51) Int. Cl.: H04L 12/40, H04L 29/12, G06F 13/16, G06F 13/42

(54) **DYNAMISCH ADRESSIERBARES MASTER-SLAVE-SYSTEM SOWIE VERFAHREN ZUM DYNAMISCHEN ADRESSIEREN VON SLAVE-EINHEITEN**
DYNAMICALLY ADDRESSABLE MASTER SLAVE SYSTEM AND METHOD FOR DYNAMIC ADDRESSING OF SLAVE UNITS
SYSTEME MAITRE-ESCLAVE ADRESSABLE DYNAMIQUEMENT ET PROCEDE D'ADRESSAGE DYNAMIQUE D'UNITES ESCLAVES

(30) Priorität: 10.10.2014 DE 102014114720; 03.12.2014 DE 102014117797
(43) Veröffentlichungstag der Anmeldung: 13.04.2016
(73) Patentinhaber: ebm-papst Mulfingen GmbH & Co. KG, 74673 Mulfingen (DE)
(72) Erfinder: Sauer, Thomas, 97980 Bad Mergentheim (DE); Lipp, Helmut, 74677 Dörzbach-Hohebach (DE); Teuke, Klaus, 74677 Dörzbach (DE); Humm, Markus, 74679 Weißbach (DE); Fessel, Andreas, 97990 Weikersheim (DE); Bürkert, Martin, 74677 Dörzbach-Hohebach (DE)
(74) Vertreter: Peter, Julian

(56) Entgegenhaltungen:
- EP-A1- 1 622 039
- WO-A1-2009/040298
- WO-A2-2005/057621
- DE-A1- 19 621 272

## Beschreibung

### Gebiet der Erfindung

Die Erfindung betrifft ein dynamisch adressierbares Master-Slave-System und ein Verfahren zum dynamischen Adressieren von Slave-Einheiten.

### Hintergrund der Erfindung

Bussysteme verschiedenster Art sind seit langem bekannt. Die der vorliegenden Erfindung zugrunde liegenden Master/Slave Bussysteme besitzen meist die Eigenschaft, dass alle Slaves eindeutige Adressen haben müssen, um individuell angesprochen werden zu können. Mittels Bussystem können dadurch einzelne Slaves individuell angesprochen werden, wobei darüber die Einstellungen der Slaves geändert werden können oder Zustandsinformationen vom Slave abgefragt werden können. Bussysteme verschiedenster Art wie z. B. Master-Slave-Bussysteme sind im Stand der Technik seit Langem bekannt.

Bei vielen Master-Slave-Bussystemen sind die Slave-Einheiten des Systems durch die Master-Einheit individuell identifizierbar und ansprechbar. Dadurch ist eine Master-Einheit beispielsweise in der Lage, über eine bestimmte Slave-Einheit eine von dieser Slave-Einheit angesteuerte Systemkomponente zu betätigen oder empfangene Meldungen einer bestimmten Slave-Einheit und damit einer bestimmten Systemkomponente zuzuordnen. Um eine solche Funktionalität zu gewährleisten, benötigt die Slave-Einheit zum einen eine systemweit eindeutige Adresse; zum anderen muss die eindeutige Adresse sowie die Zugehörigkeit der Slave-Einheit zu einer Systemkomponente oder ihre Position im Bussystem der Master-Einheit bekannt sein.

Konventionell wird dies beispielsweise erreicht, indem bei der Initialisierung eines Bussystems eine Adressier- oder Orientierungsphase durchgeführt wird. In dieser Phase werden den Slave-Einheiten zum Beispiel in einer bestimmten Reihenfolge Systemadressen zugeteilt oder der Master-Einheit wird Gelegenheit gegeben, nacheinander gespeicherte Gerätekennungen von einzelnen Slave-Einheiten an verschiedenen Positionen abzufragen. Beispielsweise wird eine Adressvergabe an die Slave-Einheiten manuell durchgeführt, indem die vorhandenen Slaves in einer definierten Reihenfolge nacheinander einzeln an das Bussystem angeschlossen oder mittels eines manuell betätigten Schalters nacheinander einzeln zur Adressierung freigegeben werden: Weil nur eine definierte, manuell ausgewählte Slave-Einheit an die Busleitung angeschlossen bzw. zur Adressierung freigegeben ist, kann die Master-Einheit durch das Ausgeben eines - eigentlich an alle am Bussystem hängenden Slave-Einheiten gerichteten - Broadcast-Befehls auf dem Bus eine eindeutige Adresse an diese einzelne Slave-Einheit vergeben. Auf Grund der definierten Reihenfolge, in der die Slave-Einheiten adressiert werden, kennt die Master-Einheit nach der Adressvergabe auch die relative Position der einzelnen Slave-Einheiten im System. Solche manuellen Verfahren sind jedoch nicht nur zeitaufwendig und durch Einbindung einer Person fehleranfällig, sondern benötigen in jedem Fall eine Bus-Architektur.

Einen automatisierten Adressiervorgang schlägt die DE 103 36 301 A1 vor. Der Adressiervorgang ist ebenfalls für ein Master-Slave-Bussystem mit einer Busleitung vorgesehen, deren Anfang und Ende mit der Master-Einheit verbunden ist. Bei diesem Verfahren ist im Laufe eines Adressvergabevorgangs die Busleitung des Systems unterbrochen, so dass die Master-Einheit die Slave-Einheiten über einen Takteingang ansprechen muss. Des Weiteren ist das Verfahren nur für solche Systeme anwendbar, die eine ringförmige Busleitung aufweisen.

Das vorliegende Verfahren beschreibt ein solches Adressierungsverfahren. Aus der EP 2 287 689 EP ist ein weiteres Bus-basierendes Adressierverfahren von Slave-Einheiten bekannt. Die Slave-Einheiten müssen hierzu über jeweils an das verwendete Bussystem angepasste Busschnittstellen verfügen, über welche sie mit einer oder mehreren Busleitungen eines Master-Slave-Bussystems verbunden werden. Auch wenn dieses Adressierverfahren für viele Bus-Systeme wie uni- oder bidirektionale, ringförmige und nicht ringförmige Busleitungen und mit beliebigen Kommunikationsprotokollen geeignet ist, erfordert die Adressierung jeweils eine Bus-Architektur des Master-Slave-Bussystems.

Dokumente DE 196 21 272 A1, WO 2009/040298 A1 und WO 2005/057621 A2 repräsentieren auch den Stand der Technik in Bezug auf was hiermit offenbart wird. Die im Stand der Technik bekannten Lösungen benötigen zur Umsetzung des Adressierverfahrens und zur Umsetzung der Busarchitektur entsprechende Systemkomponenten die zusätzliche Kosten verursachen und auch Bauraum benötigen. Auch beim Austausch von einer mit einem Slave verbundenen Anlagenkomponente, wie zum Beispiel einem Lüfter, sind entsprechende Maßnahmen notwendig, um die Adressvergabe anschließend zu konfigurieren.

Vor diesem Hintergrund ist es Aufgabe der vorliegenden Erfindung, vorbesagte Nachteile zu überwinden und ein verbessertes Verfahren zum dynamischen Adressieren von Slave-Einheiten sowie dynamisch adressierbares Master-Slave-System bereitzustellen, welches einfach in der Implementierung und Handhabung ist.

Diese Aufgabe wird gelöst mit einem dynamisch adressierbaren Master-Slave-System mit den Merkmalen von Anspruch 1 sowie einem Verfahren zum dynamischen Adressieren von Slave-Einheiten mit den Merkmalen von Anspruch 9. Grundgedanke der vorliegenden Erfindung ist es dabei, das Master-Slave-System so zu konfigurieren, dass zum Zeitpunkt der Einleitung der Adressierung der Slave-Einheiten alle Slave-Einheiten zunächst dieselbe Adresse und in den jeweiligen Slave-Einheiten serielle digitale Speicher, vorzugsweise Schiebespeicher vorzusehen, die zu Beginn alle den Wert "NULL" haben.

Die Adressierung kann mittels einer Anzahl von Signalen einer Signalfolge, die der Anzahl der zu adressierenden Slave-Einheiten entspricht, vorgenommen werden, wobei die Signale z. B. als Schaltimpulse, Flankenwechsel, Stromnulldurchgänge oder auch Frequenz- oder Amplitudenmodulationsverfahren von der Master-Einheit über eine die Slave-Einheiten seriell verbindende Signalleitung bereitgestellt werden. Relevant ist dabei nur, dass mit dem entsprechenden Signal zwei unterschiedliche Zustände (nicht signalisierter und signalisierter Zustand) realisiert werden können.

Erkennt eine Slave-Einheit an ihrem Signaleingang einen Wechsel des Signals auf den signalisierten Zustand, so wird die entsprechende Adresse der Slave-Einheit um den Wert "1" erhöht, wobei jeder Slave-Einheit die maximal erlaubte Adresse bekannt bzw. eingegeben ist und eine Erhöhung der Adresse nicht über diesen Wert hinaus durchgeführt werden kann.

Gleichzeitig wird der digitale serielle Speicher d. h. zum Beispiel der Bit-Wert im Schieberegister auf den signalisierten Zustand gesetzt. Ferner wird ein zum bisherigen Zustand des seriellen Speichers korrespondierendes Signal an dessen Ausgang und dadurch am Ausgang der betroffenen Slave-Einheit ausgegeben. Der signalisierte Zustand wird durch die serielle Aneinanderreihung der Slave-Einheiten über die Signalleitung somit jeweils um eine Periode zeitlich verzögert an die jeweils nächste benachbarte Slave-Einheit weitergegeben. Die jeweilige Informationsweitergabe erfolgt somit immer bei jedem Signalwechsel.

Eine solche erfinderische Konfiguration hat zur Folge, dass die Adresserhöhungen der Slave-Einheiten der Reihe beginnend mit ihrer eigenen Adresse erfolgt, wodurch gewährleistet wird, dass bei vollständiger Ausführung des Adressierverfahrens jeder Slave-Einheit in dem Master-Slave-System eine eindeutige individuelle Adresse zugewiesen wird.

Erfindungsgemäß wird daher ein Master-Slave-System vorgeschlagen, umfassend eine Master-Einheit mit einem Digitalausgang zur Bereitstellung eines Signals oder eine serielle Signalfolge von Signalen und mehrere Slave-Einheiten, wobei die Slave-Einheiten jeweils einen digitalen seriellen Speicher mit einer Größe von einem Bit aufweisen und jeweils einen Eingang und einen Ausgang aufweisen, wobei die Slave-Einheiten über die Eingänge und die Ausgänge über eine Signalleitung seriell miteinander verbunden sind und wobei der Eingang einer ersten Slave-Einheit über die Signalleitung mit dem Digitalausgang der Master-Einheit verbunden ist. Das Master-Slave-System ist so konfiguriert, dass am Eingang der Slave-Einheit ein vom Digitalausgang bereitgestelltes Signal (Signalwechsel) einer seriellen Signalfolge detektiert wird, um die Adresse der entsprechenden Slave-Einheit jeweils um den Wert "1" zu erhöhen, den Signalwechsel im Speicher zu hinterlegen und ein zum Inhalt des Speichers korrespondierendes Signal am Ausgang des Speichers auszugeben. Hinterlegt werden allerdings nur positive Flankenwechsel (d.h. Wert des Bits im Schieberegister kann während des Ablaufs nur von 0 auf 1 wechseln, jedoch nicht mehr auf 0. Dies ist nur nach einer erneuten Initialisierung des Adressvergabemechanismus möglich, da dann alle Schieberegister initial auf 0 gesetzt werden.

Die Signale der Master-Einheit können z. B. durch ein geeignetes Modul zur Signalerzeugung am Digitalausgang der Master-Einheit erzeugt und/oder bereitgestellt werden.

Erfindungsgemäß ist weiter vorgesehen, dass das Master-Slave-System so ausgebildet ist, dass n Slave-Einheiten (n = Anzahl der Slave-Einheiten) vorgesehen werden, wobei der Ausgang von n-1 Slave-Einheiten mit dem Eingang der jeweils seriell benachbarten nächsten Slave-Einheit über die Datenleitung verbunden sind.

In einer vorteilhaften Weiterentwicklung der Erfindung ist der Ausgang der letzten Slave-Einheit in der seriellen Anordnung mit einem Digitaleingang der Master-Einheit über eine Rückleitung verbunden, so dass ein Ringsystem gebildet wird.

Mit Vorteil ist vorgesehen, dass die Master-Einheit als speicherprogrammierbare Steuerungen, als Computer mit entsprechenden Hardwareschnittstellen oder nicht frei programmierbare Steuerungen oder als Einheit mit einem Taster zur Erzeugung des Signals ausgebildet ist.

Erfindungsgemäß ist weiter mit Vorteil vorgesehen, dass das Master-Slave-System von einem Sperrmodus in einen Adressiermodus und umgekehrt wechseln kann, bei denen die Adressierung der Slave-Einheiten entweder gesperrt oder möglich ist. In einer bevorzugten Ausführungsform der Erfindung ist die Master-Einheit zum Erzeugen eines Adressiermodussignals Sₐ ausgebildet, um das Master-Slave-System in den Adressiermodus zu versetzen und das Adressiermodussignal Sₐ entweder über den Digitalausgang oder über einen optional vorgesehenen Bus bereitgestellt werden kann. Somit kann neben der Adressvergabesignalleitung auch eine Busleitung vorgesehen werden, die allerdings zur Adressierung nicht benötigt wird.

In einer ebenfalls vorteilhaften Ausführungsform der Erfindung ist die Master-Einheit zum Erzeugen eines Sperrmodussignals Sₚ ausgebildet, um das Master-Slave-System am Ende der Adressierung wieder in den Sperrmodus zu versetzen und das Sperrmodussignal über den Digitalausgang oder alternativ über einen optional vorgesehenen Bus an den Slave-Einheiten bereitgestellt werden kann.

Die seriellen digitalen Speicher sind bevorzugt als Schieberegister ausgebildet, somit als ein logisches Schaltwerk bei der mehrere in Reihe geschaltete Einheiten ihren Speicherinhalt (je 1 Bit) bei jedem Arbeitstakt um ein Speichereinheit sozusagen weiterschieben.

Ein zweiter Aspekt der vorliegenden Erfindung betrifft ein Verfahren zum dynamischen Adressieren von den zuvor beschriebenen Slave-Einheiten eines Master-Slave-Systems, wobei zu Beginn des Adressierens alle Slave-Einheiten dieselbe Adresse besitzen und alle digitalen seriellen Speicher als Inhalt den Wert "Null" aufweisen, wobei das Verfahren folgende Schritte umfasst:
a) Versetzen des Master-Slave-Systems in den Adressiermodus mittels eines Adressiermodussignals Sₐ das von der Master-Einheit bereitgestellt wird,
b) Erzeugen einer Anzahl von seriellen Signalen (n Impulse), die der Anzahl der Slave-Einheiten (n Slave-Einheiten) entspricht und Übertragen der Signale über die Signalleitung mittels der Master-Einheit,
c) Erhöhen der Slave-Adresse der vom Signal angesprochenen Slave-Einheit jeweils um den Wert "1", sobald am Eingang an der Slave-Einheit ein Signal korrespondierend zum Zustandswechsel detektiert wird und Setzen des jeweiligen seriellen Speichers auf den signalisierten Zustand und Weitergabe eines korrespondierenden Signals am Ausgang der entsprechenden Slave-Einheit und damit an den Eingang der jeweils nächsten benachbarten Slave-Einheit,
d) Rückkehr vom signalisierten in den nichtsignalisierten Zustand nach jedem Signal der seriellen Signalfolge aus Signalen.

Da n Signalwechsel stattfinden, ergeben sich damit n+2 Zustände (Takte) und es erhöht sich der Wert der Adresse je Signalwechsel, so dass die erste Slave-Einheit n-1 mal um den Wert "1" erhöht wird, die zweite Slave-Einheit um n-2 mal und usw.

Das Verfahren kann mit Vorteil auch so durchgeführt werden, dass die Master-Einheit statt n Signale n+1 Signale erzeugt und somit noch einen über die Anzahl der Slave-Einheiten hinausgehenden weiteren Signalwechsel erzeugt, so dass die seriell letzte Slave-Einheit an ihrem Ausgang nach ihrer Adressierung durch den zusätzlichen Signalwechsel um eine weitere Adresseinheit erhöht wird und einen Signalwechsel, vorzugsweise über eine Rückleitung an dem Eingang der Master-Einheit zurückschleift, wobei die Master-Einheit den Abschluss des Adressierverfahrens detektiert.

In diesem Fall finden n+1 Signalwechsel statt und es ergeben sich damit 2n+2 Zustände (Takte) und es erhöht sich der Wert der Adresse je Signalwechsel, so dass die erste Slave-Einheit n mal um den Wert "1" erhöht wird, die zweite Slave-Einheit um n-1 mal und usw.

Wird eine Rückleitung benutzt, so erzeugt der Master noch einen Signalwechsel mehr als zur eigentlichen Adressvergabe benötigt. Dies führt dazu, dass der letzte Slave an seinem Ausgang nach seiner Adressierung, die durch den zusätzlichen Signalwechsel um eine weitere Adresseinheit erhöht wird, einen Signalwechsel der Rückleitung 4 generiert, den der Master erkennen kann. Der Master weiß bei erkanntem Flankenwechsel an seinem Eingang 7, dass alle Slaves korrekt adressiert wurden. Ist der Master lediglich ein Taster, könnte eine geeignete Signalisierungseinheit wie zum Beispiel eine LED an die Rückleitung angeschlossen werden und bei Ausgabe des Signals, bei LED kurzes Aufleuchten, dem Bediener des Tasters mitteilen, dass alle Slave-Einheiten korrekt adressiert wurden.

Alternativ zur Rückleitung kann einem intelligenten Master wie einer SPS, einem PC oder einer nicht frei programmierbaren Steuerung die Anzahl der vorhandenen Slave-Einheiten übergeben werden. Er würde dann nur die für diese Anzahl nötige Zahl von Flankenwechsel generieren. Eine Überprüfung auf korrekte Durchführung der Adressvergabe müsste in diesem Falle anderweitig erfolgen, zum Beispiel mittels geeigneter Abfragen auf dem Bus.

Zur Signalisierung des Beendens der Adressvergabe sendet der Master ein passendes Signal, welches nicht mit dem normalen Signalübergang verwechselt werden kann. Das Signal kann dabei entweder über die Signalleitung gesendet werden oder es kann alternativ ein passender Bus Befehl an die Slave-Einheiten gesendet werden.

Eine alternative Ausgestaltung des Master-Slave-Systems und des Verfahrens besteht darin, dass der Digitalausgang der Master-Einheit und die Digitalleitung zwischen der Master-Einheit vom Digitalausgang zum Eingang der ersten Slave-Einheit entfallen kann. Hierzu muss der Master-Einheit die Adresse über die Seriennummer der ersten Slave-Einheit bekannt sein. Sodann kann die Master-Einheit geeignete Bustelegramme senden, auf die nur der Slave mit der eindeutigen Seriennummer reagiert, welche die Signalwechsel, die normalerweise mittels Signal über den Digitalausgang an die erste Slave-Einheit übermittelt werden, ersetzen.

Die beschriebenen Verfahren werden so ausgeführt, dass der signalisierte Zustand der Slave-Einheit durch deren serielle Aneinanderreihung jeweils um eine Periode verzögert an die in der Serie nachfolgende Slave-Einheit weitergegeben wird.

Das Verfahren kann mit Vorteil auch dahingehend ausgebildet sein, dass für den gesamten Adressierablauf eine maximale Zeitspanne tₘₐₓ definiert ist, die jeweils zwischen zwei Signalwechseln verstreichen darf, wobei ein Abbruch der Adressvergabe und das Rücksetzen der Speicherwerte und Adresswerte auf den Ausgangswert erfolgt, sobald die Zeitspanne tₘₐₓ bei einem Signalwechsel überschritten wird.

Die Figuren offenbaren zusätzlich Merkmale der Erfindung. Es zeigen:
- Fig. 1: mehrere Slave-Einheiten, die jeweils einen digitalen seriellen Speicher mit einer Größe von einem Bit aufweisen
- Fig. 2: Adressvergabe mittels Schieberegister im Startzustand
- Fig. 3: Adressvergabe mittels Schieberegister mit Zustand im ersten Takt
- Fig. 4: Adressvergabe mittels Schieberegister mit Zustand nach dem ersten Takt
- Fig. 5: Adressvergabe mittels Schieberegister mit Zustand im zweiten Takt
- Fig. 6: Adressvergabe mittels Schieberegister mit Zustand nach dem zweiten Takt
- Fig. 7: Adressvergabe mittels Schieberegister mit Zustand im dritten Takt
- Fig. 8: Adressvergabe mittels Schieberegister mit Zustand nach dem dritten Takt
- Fig. 9: Adressvergabe mittels Schieberegister mit Zustand im vierten Takt
- Fig. 10: Adressvergabe mittels Schieberegister mit Zustand nach dem vierten Takt

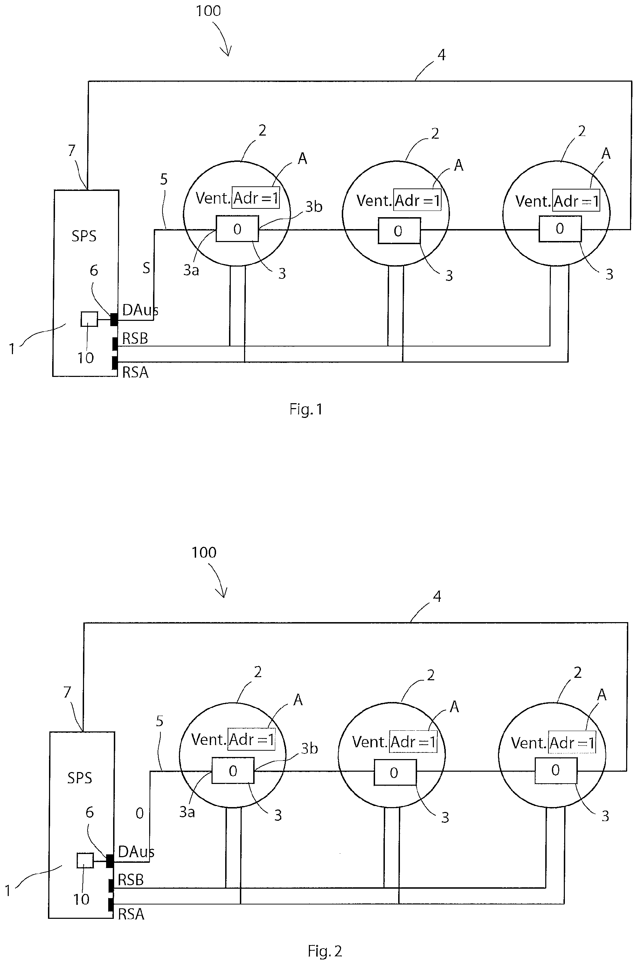

In Figur 1 ist ein Ausführungsbeispiel eines erfindungsgemäßen Master-Slave-Systems 100 gezeigt. Das Master-Slave-System 100 umfasst eine Master-Einheit 1 mit einem Digitalausgang 6 und einem Modul 10 zur Bereitstellung einer Signalfolge von Signalen S. Ferner sind drei beispielhafte Slave-Einheiten 2 vorgesehen, wobei die Slave-Einheiten 2 jeweils einen digitalen seriellen Speicher 3 mit einer Größe von einem Bit aufweisen. Ferner weisen die Slave-Einheiten 2 jeweils einen Eingang 3a und einen Ausgang 3b auf.

Wie ferner in den Figuren zu erkennen ist, sind die Slave-Einheiten 2 über die Eingänge 3a und die Ausgänge 3b über eine Signalleitung 5 seriell miteinander verbunden, wobei der Eingang 3a der ersten Slave-Einheit 2 über die Signalleitung 5 mit dem Digitalausgang 6 der Master-Einheit 1 verbunden ist. Der Ausgang der letzten Slave-Einheit 2 ist im vorliegenden Ausführungsbeispiel mit einem Digitaleingang 7 der Master-Einheit 1 verbunden und bildet zusammen mit der Rückleitung 4 sowie der Signalleitung 5 eine Ringstruktur aus.

Als Master-Einheit 1 wird hier eine speicherprogrammierbare Steuerung (SPS) verwendet. Die Slave-Einheiten 2 können z. B. Ventilatoren zugeordnet sein. Optional verlaufen Busleitungen RSA und RSB zu den Slave-Einheiten 2.

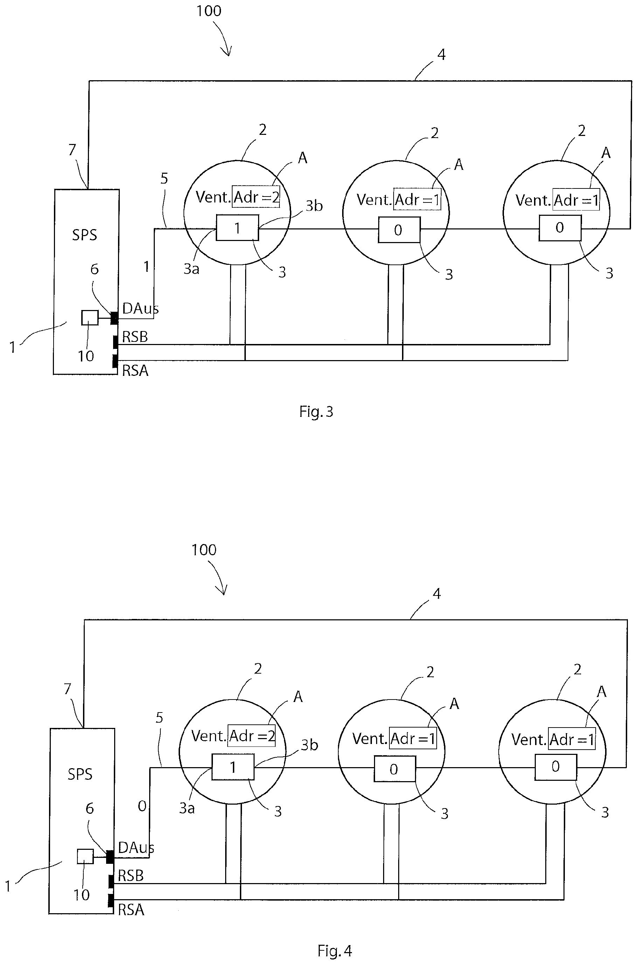

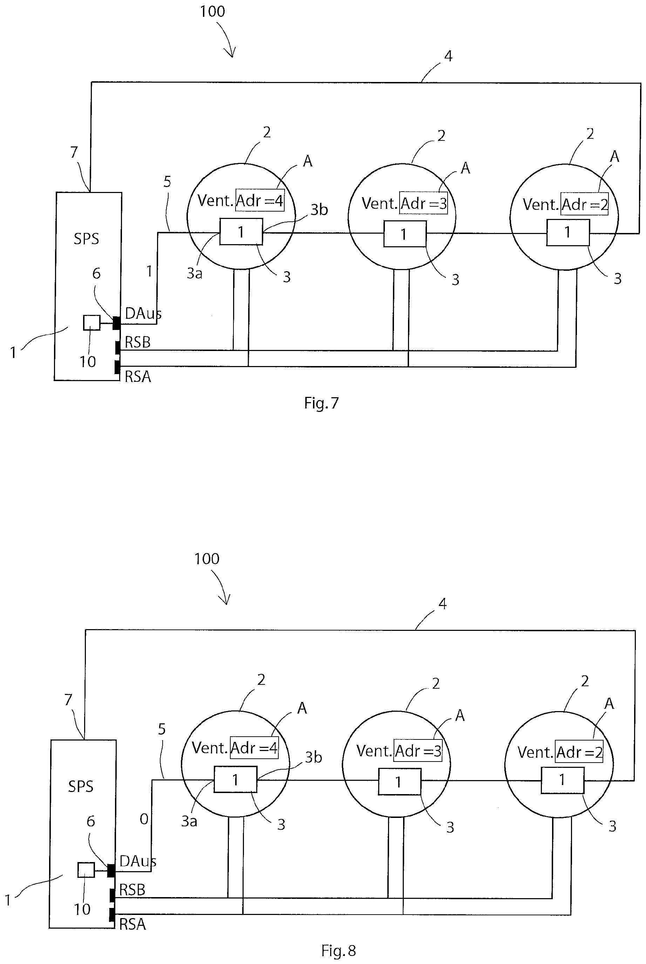

In der vorliegenden Ausführungsform sind 3 Slave-Einheiten 2 vorhanden, so dass 4 (n=3 +1) Signalwechsel erfolgen, die nacheinander in den Figuren 3 bis 10 dargestellt sind. Es ergeben sich demnach 2n+2, somit 8 Zustände (Takte), wobei sich der Wert der Adresse A je Signalwechsel, um den Wert "1" erhöht einschließlich bis zum letzten Signalwechsel, der über die Rückleitung 4 an den Digitaleingang 7 der SPS-Steuerung zurückgeschleift wird.

Das Master-Slave-System 100 ist so konfiguriert, dass am Eingang 3a der Slave-Einheit 2 ein vom Digitalausgang 6 bereitgestelltes Signal (Signalwechsel) einer seriellen Signalfolge detektiert wird und dadurch die Adresse A der entsprechenden Slave-Einheit 2 jeweils um den Wert "1" erhöht wird. Anders ausgedrückt bedeutet dies, dass sobald am Eingang des Speichers 3 ein Signalwechsel erkannt wird, ein zum Inhalt des Speichers korrespondierendes Signal am Ausgang des Speichers ausgegeben und der Inhalt des Speichers auf den zum am Eingang anliegenden Signal korrespondierenden Wert gesetzt wird. Hinterlegt werden allerdings nur positive Flankenwechsel, wie zuvor erläutert.

Zum Adressieren wird das Master-Slave-System 100 mittels eines Adressiermodussignals Sₐ, das von der Master-Einheit 1 bereitgestellt wird, in den Adressiermodus versetzt, wie dies zuvor beschrieben wurde.

In der Figur 2 wird der Ausgangszustand (Startzustand) des Master-Slave-Systems 100 dargestellt. Zum Zeitpunkt der Einleitung der Adressierung besitzen alle Slave-Einheiten 2 dieselbe Adresse A mit dem dargestellten Wert = 1 (Eins) und alle seriellen Speicher 3 enthalten den Wert = 0 (Null).

Die Figur 3 zeigt die Adressvergabe über die Speicher 3, die als Schieberegister arbeiten. Der Signalwechsel wird im Speicher 3 hinterlegt und ein zum Inhalt des Speichers 3 korrespondierendes Signal am Ausgang 3b des Speichers 3 und damit am Eingang 3a des in der Serie nachfolgenden Slave-Einheit 2 ausgegeben. Die Adresse A der ersten Slave-Einheit 2 hat sich um den Wert "1" auf 2 erhöht, die beiden nachfolgenden Slave-Einheiten besitzen noch den Adresswert 1.

In Figur 4 ist der Zustand nach dem ersten Takt gezeigt. Nach dem Signalwechsel wird in den nicht signalisierten Zustand zurückgekehrt, die mit dem Wert "0" an der Signalleitung 5 dargestellt wird.

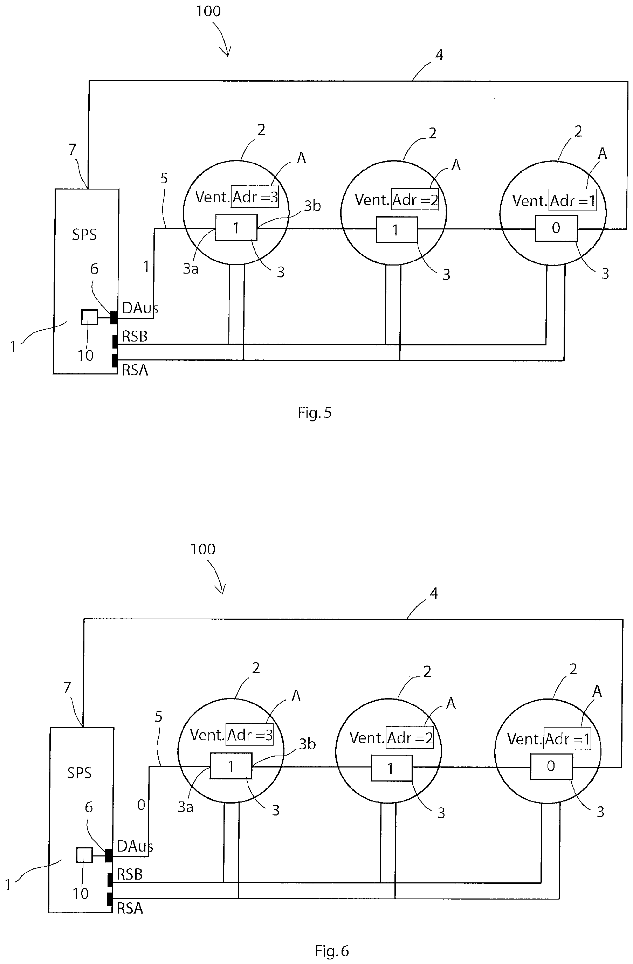

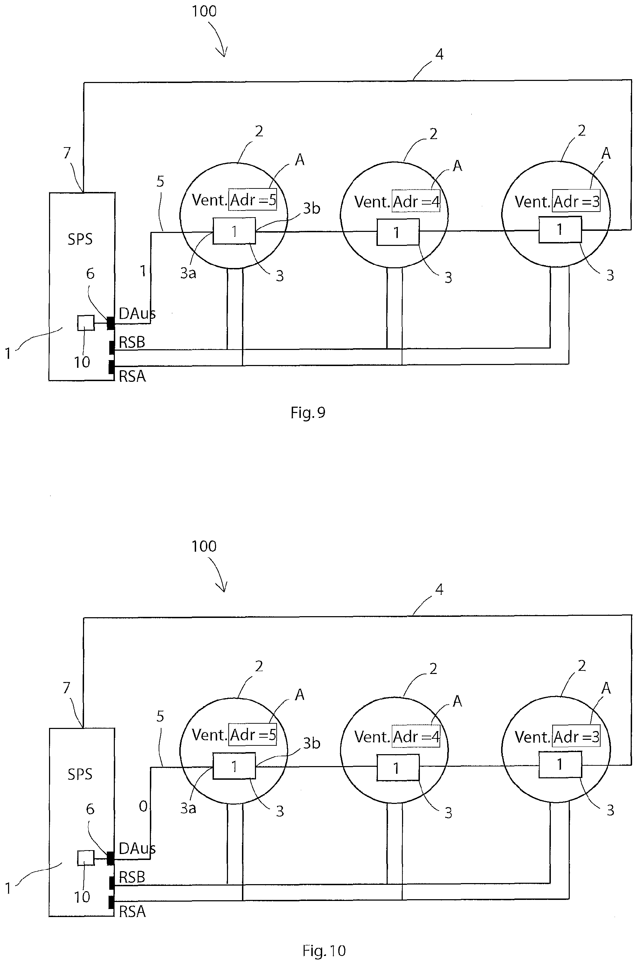

In den Figuren 5 und 6, bzw. 7 und 8 wiederholt sich der zuvor beschriebene Vorgang. Der signalisierte Zustand wird durch die serielle Aneinanderreihung der Slave-Einheiten 2 jeweils um eine Periode verzögert an die nächsten Slave-Einheit 2 weitergegeben. Dies hat zur Folge, dass die Slave-Einheiten erst der Reihe nach mit der Erhöhung ihrer eigenen Adresse beginnen, wodurch sichergestellt ist, dass bei kompletter Ausführung des Verfahrens jeder Slave eine eindeutige individuelle Adresse aufweist. Die jeweilige Informationsweitergabe erfolgt somit immer bei jedem Signalwechsel. Wie zuvor beschrieben, wird ein weiterer Signalwechsel initiiert nachdem alle drei Slave-Einheiten 2 des Master-Slave-Systems 100 adressiert wurden und die Adressen A= 4, 3, 2 in dieser Reihenfolge aufweisen. Der Zustand im vierten Takt wird in der Figur 10 und der Zustand nach dem vierten Takt in der Figur 11 dargestellt. Der letzte Signalwechsel (Signalimpuls) wird von der SPS-Steuerung 1 über die Rückleitung der Signalleitung 5 an die SPS-Steuerung 1 gegeben, wodurch sich die Adressen A jeweils um den Wert "1" erhöhen und von der SPS-Steuerung 1 detektiert wird, dass die Adressierung abgeschlossen ist.

Für den gesamten Ablauf ist eine maximale Zeitspanne definiert, die zwischen zwei Signalwechseln liegen darf. Wird diese überschritten, so werten alle Slave-Einheiten 2 dieses als Abbruch der Adressvergabe und setzen ihren seriellen Speicher 3 sowie ihre eigene Slaveadresse A auf den jeweiligen Ausgangswert zurück.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Alle offenbarten Merkmale sind in beliebigen Kombinationen verwendbar soweit dies technisch möglich ist.

## Patentansprüche

1. Master-Slave-System (100) zur dynamischen Adressvergabe von Slave-Einheiten (2) umfassend eine Master-Einheit (1) mit einem Digitalausgang (6) zur Bereitstellung einer seriellen Signalfolge von Signalen (S) und wenigstens zwei Slave-Einheiten (2), wobei die Slave-Einheiten (2) jeweils einen digitalen seriellen Speicher (3) mit einer Größe von einem Bit aufweisen und jeweils einen Eingang (3a) und einen Ausgang (3b) aufweisen, wobei die Slave-Einheiten (2) über die Eingänge (3a) und die Ausgänge (3b) über eine Signalleitung (5) seriell miteinander verbunden sind und wobei der Eingang (3a) einer ersten Slave-Einheit (2) über die Signalleitung (5) mit dem Digitalausgang (6) der Master-Einheit (1) verbunden ist, wobei das Master-Slave-System (100) so konfiguriert ist, dass am Eingang (3a) der Slave-Einheit (2) ein Signalwechsel einer vom Digitalausgang (6) bereitgestellten seriellen Signalfolge von Signalen (S) detektiert wird, wobei in Reaktion auf den Signalwechsel das Master-Slave System konfiguriert ist,
- die Adresse (A) der entsprechenden Slave-Einheit (2) jeweils um den Wert "1" zu erhöhen,
- den Signalwechsel im Speicher (3) zu hinterlegen, wobei nur der positive Flankenwechsel eines Signalwechsels der seriellen Signalfolge von Signalen (S) hinterlegt wird und
- ein korrespondierendes Signal am Ausgang (3b) der entsprechenden Slave-Einheit (2) weiterzugeben und damit am Eingang der jeweils nächsten benachbarten Slave-Einheit (2) bereitzustellen.

2. Master-Slave-System (100) gemäß Anspruch 1, **dadurch gekennzeichnet, dass** n-Slave-Einheiten (2) vorgesehen sind, wobei der Ausgang (3b) von n-1 Slave-Einheiten (2) mit dem Eingang der jeweils seriell benachbarten nächsten Slave-Einheit (2) verbunden ist.

3. Master-Slave-System (100) gemäß Anspruch 1 oder 2, **dadurch gekennzeichnet, dass** der Ausgang der letzten Slave-Einheit (2) in der seriellen Anordnung mit einem Digitaleingang (7) der Master-Einheit (1) über eine Rückleitung (4) verbunden ist.

4. Master-Slave-System (100) gemäß einem der vorhergehenden Ansprüche, **dadurch gekennzeichnet, dass** die Master-Einheit (1) als speicherprogrammierbare Steuerung (SPS), Computer mit entsprechenden Hardwareschnittstellen oder nicht frei programmierbare Steuerung oder als Einheit mit einem Taster zur Erzeugung des Signals (S) ausgebildet sind.

5. Master-Slave-System (100) gemäß einem der vorhergehenden Ansprüche, **dadurch gekennzeichnet, dass** das Master-Slave-System (100) von einem Sperrmodus in einen Adressiermodus und umgekehrt wechseln kann, bei denen die Adressierung der Slave-Einheiten (2) entweder gesperrt oder möglich ist.

6. Master-Slave-System (100) gemäß Anspruch 5, **dadurch gekennzeichnet, dass** die Master-Einheit (1) zum Erzeugen eines Adressiermodussignals, Sa, ausgebildet ist, um das Master-Slave-System (100) in den Adressiermodus zu versetzen und das Adressiermodussignal, Sa, über den Digitalausgang (6) oder über einen optional vorgesehenen Bus (RSA, RSB) bereitgestellt werden kann.

7. Master-Slave-System (100) gemäß Anspruch 5, **dadurch gekennzeichnet, dass** die Master-Einheit (1) zum Erzeugen eines Sperrmodussignals, Sp, ausgebildet ist, um das Master-Slave-System (100) am Ende der Adressierung wieder in den Sperrmodus zu versetzen und das Sperrmodussignal, Sp, über den Digitalausgang (6) oder über einen optional vorgesehenen Bus (RSA, RSB) bereitgestellt werden kann.

8. Master-Slave-System (100) gemäß einem der vorhergehenden Ansprüche, **dadurch gekennzeichnet, dass** die seriellen digitalen Speicher (3) als Schieberegister ausgebildet sind.

9. Verfahren zur dynamischen Adressvergabe von Slave-Einheiten (2) eines Master-Slave-Systems (100) gemäß einem der Ansprüche 1 bis 8, wobei zu Beginn der Adressvergabe alle Slave-Einheiten (2) dieselbe Adresse besitzen und alle digitalen seriellen Speicher (3) als Inhalt den Wert "Null" aufweisen, wobei das Verfahren folgende Schritte umfasst:
a) Versetzen des Master-Slave-Systems (100) in den Adressiermodus mittels eines Adressiermodussignals, Sa, das von der Master-Einheit (1) bereitgestellt wird,
b) Erzeugen einer seriellen Signalfolge von Signalen (S), die der Anzahl der Slave-Einheiten (2) entspricht und Übertragen der Signale über die Signalleitung (5) mittels der Master-Einheit (1),
c) sobald am Eingang (3a) der Slave-Einheit (2) ein Signalwechsel der seriellen Signalfolge von Signalen (S) detektiert wird,
- erhöhen der Slave-Adresse der vom jeweiligen Signal (S) angesprochenen Slave-Einheit (2) jeweils um den Wert "1",
- hinterlegen des Signalwechsels im Speicher (3), wobei nur der positive Flankenwechsel eines Signalwechsels der seriellen Signalfolge von Signalen (S) hinterlegt werden, und
- weitergeben eines korrespondierenden Signals am Ausgang (3b) der entsprechenden Slave-Einheit (2) und bereitstellen des korrespondierenden Signals am Eingang der jeweils nächsten benachbarten Slave-Einheit (2).

10. Verfahren nach Anspruch 9, **dadurch gekennzeichnet dass** der signalisierte Zustand der Slave-Einheit (2) durch deren serielle Aneinanderreihung jeweils um eine Periode verzögert an die in der Serie nachfolgende Slave-Einheit (2) weitergegeben wird.

11. Verfahren nach Anspruch 9 oder 10, **dadurch gekennzeichnet dass** für den gesamten Ablauf eine maximale Zeitspanne tmax definiert ist, die jeweils zwischen zwei Signalwechseln verstreichen darf, wobei ein Abbruch der Adressvergabe und das Rücksetzen der Speicherwerte und Adresswerte auf den Ausgangswert erfolgt, sobald die Zeitspanne tmax bei einem Signalwechsel überschritten wird.

12. Verfahren nach einem der Ansprüche 9 bis 11, **dadurch gekennzeichnet dass** die Master-Einheit (1) noch einen über die Anzahl der Slave-einheiten (2) hinausgehenden weiteren Signalwechsel erzeugt, so dass die seriell letzte Slave-Einheit (2) an ihrem Ausgang (3b) nach ihrer Adressierung, die durch den zusätzlichen Signalwechsel um eine weitere Adresseinheit erhöht wird, einen Signalwechsel, vorzugsweise über eine Rückleitung (4) an dem Eingang (7) der Master-Einheit (1) bereitstellt, wobei die Master-Einheit (1) den Abschluss des Adressierverfahrens detektiert.

## Claims

1. Master-slave system(100) for dynamical address allocating of slave units (2) comprising a master unit (1) having a digital output (6) for supplying a serial signal sequence of signals (S), and at least two slave units (2), wherein each of the slave units (2) includes at least one digital serial memory (3) having a size of one bit, and each includes an input (3a) and an output (3b), wherein the slave units (2) are serially connected to one another via the inputs (3a) and the outputs (3b) via a signal line (5), and wherein the input (3a) of a first slave unit (2) is connected via the signal line (5) to the digital output (6) of the master unit (1), wherein the master slave system (100) is configured so that a signal change of a serial signal sequence of signals (S) supplied by the digital output (6) is detected at the input (3a) of the slave unit (2), wherein in reaction to the signal change the master-slave system is configured
- to raise the address (A) of the corresponding slave unit (2) in each case by the value "1",
- to store the signal change in the memory (3), wherein only the positive flank change of a signal change of the serial signal sequence of signals (S) is stored and
- to pass a corresponding signal at the output (3b) of the respective slave unit (2) and thereby supply at the Input of the respective nearest adjacent slave unit (2).

2. Master-slave system (100) according to Claim 1, **characterized in that** n slave units (2) are provided, wherein the output (3b) of n-1 slave units (2) is connected to the input of the respective next adjacent slave unit (2) in the series.

3. Master-slave system (100) according to Claim 1 or 2, **characterized in that** the output of the last slave unit (2) in the serial arrangement is connected to a digital input (7) of the master unit (1) via a return line (4).

4. Master-slave system (100) according to one of the preceding claims, **characterized in that** the master unit (1) is designed as a memory-programmable control (MPC), a computer having corresponding hardware interfaces or not freely programmable control or as a unit having a push button for generating the signal (S).

5. Master-slave system (100) according to one of the preceding claims, **characterized in that** the master-slave system (100) may switch from a lock mode to an address mode and vice versa, in which the addressing of the slave units (2) is either locked or enabled.

6. Master-slave system (100) according to Claim 5, **characterized in that** the master unit (1) is designed for generating an address mode signal, Sa, in order to set the master-slave system (100) in the address mode, and the address mode signal, Sa, may be supplied via the digital output (6) or via an optionally provided bus (RSA, RSB).

7. Master-slave system (100) according to Claim 5, **characterized in that** the master unit (1) is designed for generating a lock mode signal, Sp, in order to reset the master-slave system (100) in the lock mode when the addressing has ended, and the lock mode signal, Sp, may be supplied via the digital output (6) or via an optionally provided bus (RSA, RSB).

8. Master-slave system (100) according to one of the preceding claims, **characterized in that** the serial digital memories (3) are designed as shift registers.

9. Method for dynamical address allocation of slave units (2) of a master-slave system (100) according to one of Claims 1 through 8, wherein at the start of the dynamical address allocation, all slave units (2) have the same address, and the content of all digital serial memories (3) is the value "zero", the method comprising the following steps:
a) Setting the master-slave system (100) in the address mode by means of an address mode signal, Sa, supplied by the master unit (1),
b) Generating a serial signal sequence of signals (S), which corresponds to the number of slave units (2) and transmitting the signals over the signal line (5) by means of the master unit (1),
c) as soon as a signal change of the serial signal sequence of signals (S) is detected at the input (3a) of the slave unit (2),
- raising the slave address of the slave unit addressed by each signal (S), in each case by the value "1",
- storing of the signal change in the memory (3), wherein only the positive flank change of a signal change of the serial signal sequence of signals (S) is stored, and
- forwarding a corresponding signal at the output (3b) of the corresponding slave unit (2) and supplying of the corresponding signals at the input of the respective nearest adjacent slave unit (2).

10. Method according to Claim 9, **characterized in that** the signaled state of the slave unit (2) is forwarded to the next slave unit (2) in the series, in each case delayed by one period as a result of its serial sequencing.

11. Method according to Claim 9 or 10, **characterized in that** a maximum time span tmax is defined for the entire process, which in each case may elapse between two signal changes, wherein a termination of the address assignment and the resetting of the memory values and address values to the output value occurs as soon as the time span tmax during a signal change is exceeded.

12. Method according to Claims 9 through 11, **characterized in that** the master unit (1) generates one additional signal change beyond the number of slave units (2), such that the last slave unit (2) in the series, after being addressed, is raised at its output (3b) by one additional address unit as a result of the additional signal change, preferably via a return line (4) at the input (7) of the master unit (1). wherein the master unit (1) detects the conclusion of the addressing process.

## Revendications

1. Système maître/esclave (100) pour l'attribution dynamique d'adresses d'unités esclaves (2) comprenant une unité maître (1) avec une sortie numérique (6) pour la fourniture d'une suite de signaux séquentielle de signaux (S) et au moins deux unités esclaves (2), dans lequel les unités esclaves (2) présentent respectivement une mémoire série numérique (3) avec une grandeur d'un bit et respectivement une entrée (3a) et une sortie (3b), les unités esclaves (2) étant reliées les unes aux autres en série par l'intermédiaire des entrées (3a) et des sorties (3b) par l'intermédiaire d'une ligne de signaux (5), et l'entrée (3a) d'une première unité esclave (2) étant reliée à la sortie numérique (6) de l'unité maître (1) par l'intermédiaire de la ligne de signaux (5), le système maître/esclave (100) étant configuré de telle sorte que, à l'entrée (3a) de l'unité esclave (2) est détecté un changement de signal d'une suite de signaux séquentielle de signaux (S) fournie par la sortie numérique (6), le système maître/esclave étant configuré pour, en réaction au changement de signal,
- augmenter l'adresse (A) de l'unité esclave correspondante (2) respectivement de la valeur « 1 »,
- enregistrer le changement de signal dans la mémoire (3), seul le changement de front positif d'un changement de signal de la suite de signaux séquentielle de signaux (S) étant enregistré, et
- transmettre un signal correspondant en sortie (3b) de l'unité esclave correspondante (2) et le fournir ainsi en entrée de l'unité esclave (2) respectivement immédiatement adjacente,

2. Système maître/esclave (100) selon la revendication 1, **caractérisé en ce que** n-unités esclaves (2) sont prévues, la sortie (3b) de n-1 unités esclaves (2) étant reliée à l'entrée de l'unité esclave (2) respectivement sériellement adjacente qui suit.

3. Système maître/esclave (100) selon la revendication 1 ou 2, **caractérisé en ce que** la sortie de la dernière unité esclave (2) dans l'agencement en série est reliée à une entrée numérique (7) de l'unité maître (1) par l'intermédiaire d'une ligne de retour (4).

4. Système maître/esclave (100) selon l'une des revendications précédentes, **caractérisé en ce que** l'unité maître (1) est formée comme commande à logique programmable (SPS), ordinateur avec interfaces matérielles correspondantes ou commande non librement programmable ou comme unité avec une touche de génération du signal (S).

5. Système maître/esclave (100) selon l'une des revendications précédentes, **caractérisé en ce que** le système maître/esclave (100) peut passer d'un mode de blocage à un mode d'adressage et inversement, dans lesquels l'adressage des unités esclaves (2) est soit bloqué, soit possible.

6. Système maître/esclave (100) selon la revendication 5, **caractérisé en ce que** l'unité maître (1) est formée pour générer un signal de mode d'adressage, Sa, pour placer le système maître/esclave (100) dans le mode d'adressage et le signal de mode d'adressage, Sa, peut être fourni sur la sortie numérique (6) ou sur un bus (RSA, RSB) prévu de marnière facultative.

7. Système maître/esclave (100) selon la revendication 5, **caractérisé en ce que** l'unité maître (1) est formée pour générer un signal de mode de blocage, Sp, pour replacer le système maître/esclave (100) dans le mode de blocage à la fin de l'adressage et le signal de mode de blocage, Sp, peut être fourni sur la sortie numérique (6) ou sur un bus prévu de manière facultative (RSA, RSB).

8. Système maître/esclave (100) selon l'une des revendications précédentes, **caractérisé en ce que** les mémoires numériques série (3) sont formées comme registres à décalage.

9. Procédé d'attribution dynamique d'adresse d'unités esclaves (2) d'un système maître/esclave (100) selon l'une des revendications 1 à 8, dans lequel, au début de l'attribution d'adresse, les unités esclaves (2) possèdent toutes la même adresse et toutes les mémoires série numériques (3) présentent la valeur « zéro » comme contenu, le procédé comprenant les étapes suivantes :
a) placement du système maître/esclave (100) dans le mode d'adressage à l'aide d'un signal de mode d'adressage, Sa, qui est fourni par l'unité maître (1),
b) génération d'une suite de signaux séquentielle de signaux (S) qui correspond au nombre des unités esclaves (2) et transmission des signaux sur la ligne de signaux (5) au moyen de l'unité maître (1),
c) dès qu'un changement de signal de la suite de signaux séquentielle de signaux (S) est détecté en entrée (3a) de l'unité esclave (2),
- augmenter l'adresse esclave de l'unité esclave (2) adressée par le signal respectif (S) respectivement de la valeur « 1 »,
- enregistrer le changement de signal dans la mémoire (3), seul le changement de front positif d'un changement de signal de la suite de signaux séquentielle de signaux (S) étant enregistré, et
- transmettre un signal correspondant en sortie (3b) de l'unité esclave correspondante (2) et fournir le signal correspondant en entrée de l'unité esclave respectivement immédiatement adjacente (2).

10. Procédé selon la revendication 9, **caractérisé en ce que** l'état signalisé de l'unité esclave (2), retardé respectivement d'une période par l'enchaînement en série de celle-ci, est transmis à l'unité esclave (2) qui suit dans la série.

11. Procédé selon la revendication 9 ou 10, **caractérisé en ce que** qu'une période maximale tmax pouvant s'écouler respectivement entre deux changements de signaux est définie pour l'ensemble du cycle, une interruption de l'attribution d'adresse ayant lieu et la réinitialisation des valeurs de mémoire et des valeurs d'adresse à la valeur de la sortie dès qu'il y a dépassement de la période tmax en cas de changement de signal.

12. Procédé selon l'une des revendications 9 à 11, **caractérisé en ce que** l'unité maître (1) génère encore un changement de signal supplémentaire qui dépasse le nombre des unités esclaves (2), de sorte que la dernière unité esclave de la série (2) fournit sur sa sortie (3b), après son adressage qui est augmenté d'une autre unité d'adresse par le changement de signal supplémentaire, un changement de signal, de préférence sur une ligne de retour (4) à l'entrée (7) de l'unité maître (1), l'unité maître (1) détectant la fin de la procédure d'adressage.
